(19) Europäisches Patentamt

European Patent Office

Office européen des brevets

(11) **EP 1 588 135 B1**

(12) **EUROPÄISCHE PATENTSCHRIFT**

(45) Veröffentlichungstag und Bekanntmachung des Hinweises auf die Patenterteilung:
**13.09.2006 Patentblatt 2006/37**

(51) Int Cl.:
*G01J 3/28* *(2006.01)*    *G01N 21/64* *(2006.01)*
*G01J 3/453* *(2006.01)*

(21) Anmeldenummer: **04705082.8**

(22) Anmeldetag: **26.01.2004**

(86) Internationale Anmeldenummer:
**PCT/EP2004/000608**

(87) Internationale Veröffentlichungsnummer:
**WO 2004/068091 (12.08.2004 Gazette 2004/33)**

(54) **ANORDNUNG UND VERFAHREN ZUR SPEKTRAL AUFLÖSENDEN ERFASSUNG EINER PROBE**

ARRAY AND METHOD FOR THE SPECTRALLY RESOLVING DETECTION OF A SAMPLE

DISPOSITIF ET PROCEDE DE DETECTION A RESOLUTION SPECTRALE D'UN ECHANTILLON

(84) Benannte Vertragsstaaten:
**AT BE BG CH CY CZ DE DK EE ES FI FR GB GR HU IE IT LI LU MC NL PT RO SE SI SK TR**

(30) Priorität: **29.01.2003 EP 03002038**

(43) Veröffentlichungstag der Anmeldung:
**26.10.2005 Patentblatt 2005/43**

(73) Patentinhaber: **Max-Planck-Gesellschaft zur Förderung
der Wissenschaften e.V.
80539 München (DE)**

(72) Erfinder:
• **HEINTZMANN, Rainer, Walther
37077 Göttingen (DE)**
• **LIDKE, Keith, Allan
37077 Göttingen (DE)**
• **JOVIN, Thomas, Michael
37077 Göttingen (DE)**

(74) Vertreter: **Schneider, Peter Christian
Obere Karspüle 41
37073 Göttingen (DE)**

(56) Entgegenhaltungen:
WO-A-99/06807          DE-A- 19 749 377
DE-U- 29 724 412       US-A- 5 539 517
US-A- 6 108 082

• J.G. HIRSCHBERG AND E. COHEN:
"Pentaferometer: a solid Sagnac interferometer"
APPLIED OPTICS, Bd. 38, Nr. 1, - 1. Januar 1999
(1999-01-01) Seiten 136-138, XP002283124
• J. G. HIRSCHBERG ET AL: "Interferometric
Measurement of fluorescent excitation spectra"
APPLIED OPTICS , Bd. 37, Nr. 10, - 1. April 1998
(1998-04-01) Seiten 1953-1957, XP002283216

EP 1 588 135 B1

**Beschreibung**

Die Erfindung bezieht sich auf eine Anordnung zur spektral auflösenden Erfassung einer mit einer Beleuchtungsstrahlung beleuchteten Probe durch Detektion einer von der Probe ausgehenden Probenstrahlung, mit einem Beleuchtungsstrahlengang, über den Beleuchtungsstrahlung der Probe von einer Beleuchtungsquelle her zuführbar ist, und mit einem Beobachtungsstrahlengang, über den Probenstrahlung einem Detektor als Beobachtungsstrahlung zuführbar ist, wobei in einem die Probe nicht umfassenden Teil des Beobachtungsstrahlengangs ein Interferometer angeordnet ist, welches einfallende Interferometer-Eingangsstrahlung mittels eines Interferometer-Strahlteilers in zwei Strahlungsanteile aufspaltet, diese über zwei Wege, die Strahlungsleitmittel aufweisen und deren effektive Weglängendifferenz änderbar ist, leitet und sie miteinander interferierend zu einer Interferometer-Ausgangsstrahlung überlagert, sodass die Spektralverteilung der in einem Punkt des Detektors auftreffenden Beobachtungsstrahlung durch Änderung der effektiven Weglängendifferenz änderbar ist.

Die Erfindung bezieht sich weiter auf ein Verfahren zur spektral auflösenden Erfassung einer mit einer Beleuchtungsstrahlung beleuchteten Probe durch Detektion einer von der Probe ausgehenden Probenstrahlung, bei dem der Probe Beleuchtungsstrahlung von einer Beleuchtungsquelle her über einen Beleuchtungsstrahlengang zugeführt wird und Probenstrahlung einem Detektor als Beobachtungsstrahlung über einen Beobachtungsstrahlengang zugeführt wird, wobei Beobachtungsstrahlung ein in einem die Probe nicht umfassenden Teil des Beobachtungsstrahlengangs angeordnetes Interferometer durchläuft, in welchem sie als einfallende Interferometer-Eingangsstrahlung mittels eines Interferometer-Strahlteilers in zwei Strahlungsanteile aufgespalten wird, die zwei Strahlungsanteile über zwei Wege, deren effektive Weglängendifferenz änderbar ist, geleitet und miteinander interferierend zu einer Interferometer-Ausgangsstrahlung überlagert werden, wobei nacheinander eine Mehrzahl von Messdatenaufnahmen mit unterschiedlichen Einstellungen der effektiven Weglängendifferenz aufgenommen werden, sodass die Spektralverteilung der in einem Punkt des Detektors auftreffenden Beobachtungsstrahlung bei unterschiedlichen Messwertaufnahmen verschieden ist.

Eine derartige Vorrichtung und ein derartiges Verfahren sind bekannt aus EP 0767361 A2. Beschrieben ist dort ein bildgebendes Spektrometer zur spektralen Analyse von Licht, das von einer Probe ausgesandt wird. Im Beobachtungsstrahlengang des bekannten Spektrometers ist ein Interferometer angeordnet, in welches Licht aus einem Punkt in einer Fokalebene der Probe als paralleles Strahlenbündel unter einem bestimmten Einfallswinkel eingekoppelt wird. Das Eingangsstrahlenbündel wird mittels eines als Strahlteiler fungierenden halbdurchlässigen Spiegels in zwei Teilstrahlen aufgespalten. Die Teilstrahlen durchlaufen unterschiedliche Wege in dem Interferometer und werden am Interferometerausgang wieder miteinander interferierend vereinigt. Der vereinigte Strahl wird auf die sensitive Fläche eines bildgebenden Detektors abgebildet. Die Wege, welche die beiden Teilstrahlen in dem Interferometer durchlaufen, weisen relativ zueinander eine optische (bzw. verallgeinert: eine effektive) Weglängendifferenz (OPD: optical path difference) auf. Bei der bekannten Anordnung entspricht die optische Weglängendifferenz im Wesentlichen der geometrischen Weglängendifferenz. Die OPD in dem bekannten Interferometer ist durch Änderung der geometrischen Lichtwege änderbar. Äquivalent könnte auch ein Brechungsindex im Bereich der Lichtwege variiert werden.

Zur Durchführung einer Spektralanalyse werden mehrere Aufnahmen mit dem Detektor gemacht, wobei die am Interferometer eingestellte OPD zwischen den einzelnen Aufnahmen verändert wird. Dies hat zur Folge, dass je nach Einstellung der OPD bestimmte Spektralanteile der Beobachtungsstrahlung durch Interferenz verstärkt bzw. vermindert oder gelöscht werden. Die spektrale Verteilung des in einem Punkt des Detektors auftreffenden Beobachtungslichtes ist daher nicht nur abhängig von der spektralen Verteilung des von der Probe ausgesandten Lichtes, sondern auch von der jeweils eingestellten OPD. Man beachte, dass die OPDs für unterschiedliche Detektorpunkte in der Regel unterschiedlich sind. Jeder einzelne Detektorpunkt kann auch unabhängig von den übrigen Detektorpunkten als einkanaliger Einzeldetektor betrachtet werden.

Ergebnis einer derartigen Messung ist eine Folge von Intensitätsmesswerteinheiten als Funktion der Interferometereinstellung. Die Bezeichnung "Messwerteinheit" bezieht sich im eindimensionalen Fall auf einen einzelnen Messwert und bezeichnet im Fall eines bildgebenden Spektrometers ein aufgenommenes Einzelbild. Die aufgenommene Folge von Intensitätsmesswerteinheiten entspricht im bildgebenden Fall einem "Bildstapel", in dem jeweils gleiche Pixel entlang der Interferometereinstellungsparameter-Achse (z.B. ein Einstellungswinkel) zueinander korrespondieren und als unabhängige, eindimensionale Messungen des entsprechenden Probenpunktes angesehen werden können.

Ein solcher Bildstapel kann pixelweise, etwa durch Anwendung einer Fourier-Transformation in ein Spektrum umgerechnet werden, welches die spektrale Verteilung des von dem entsprechenden Punkt der Probe ausgehenden Lichtes repräsentiert. Das Ergebnis hat die Form einer Folge von Spektraldateneinheiten. Die Bezeichnung "Dateneinheit" bezieht sich analog zu der oben erläuterten "Messwerteinheit" im eindimensionalen Fall auf einen einzelnen berechneten Datenwert und bezeichnet im Fall eines bildgebenden Spektrometers ein berechnetes Einzelbild. Die berechnete Folge von Spektraldateneinheiten entspricht im bildgebenden Fall einem zweiten Bildstapel, in dem jeweils Pixel gleicher Position im Einzelbild entlang der Spektralachse miteinander korrespondieren. Derartige Pixelfolgen können als unabhängige, eindimensionale Spektren des entsprechenden Probenpunktes angesehen werden. Anstelle einer Fourier-Transformation können grundsätzlich auch andere spektrumbildende mathematische Operationen angewandt werden.

Die zugrundeliegenden Prinzipien sind dem Fachmann auf dem Gebiet der Fourier-Spektroskopie bekannt. So hängt bei der herkömmlichen Fourier-Spektroskopie die in einem Punkt des Detektors detektierte Intensität $I_{det}$ ($OPD_{em}$) wie folgt von der von der Probe ausgehenden spektralen Intensität $I_{em}(k_{em})$ ab:

$$I_{det}(OPD_{em}) = \int_0^\infty \varepsilon_{em}(k_{em}, OPD_{em}) I_{em}(k_{em}) dk_{em} \qquad (1)$$

Dabei ist $k_{em} = 2\pi/\lambda_{em}$, die Wellenzahl, wobei $\lambda_{em}$ die Wellenlänge der Probenstrahlung ist. Der Ausdruck $\varepsilon_{em}$ (k, $OPD_{em}$) beschreibt den Effekt des Interferometers und kann genährt werden als

$$\varepsilon_{em}(k_{em}, OPD_{em}) = (1 + m_{em}\cos(k_{em}, OPD_{em}))/2 \qquad (2)$$

Dabei ist $m_{em}$ der Modulationsgrad des Interferenzmusters, der beispielsweise aufgrund von Geräteunzulänglichkeiten, wie etwa einem nicht genau hälftig teilenden Strahlteiler, kleiner als eins sein kann. Der Index "*em*" bei OPD deutet an, dass es sich um diejenige OPD handelt, die zwischen den miteinander interferierenden Anteilen der Beobachtungsstrahlung liegt.

Ergebnis der spektrumbildenden mathematischen Operation, insbesondere der Fourier-Transformation, liefert die gesuchte Spektralverteilung $I_{em}(k_{em})$.

Das bekannte Verfahren unter Verwendung der bekannten Vorrichtung weist insbesondere bei bildgebenden Anwendungen mit geringen Strahlungsintensitäten, wie beispielsweise bei der bildgebenden Ermittlung von Emissionsspektren bei der Fluoreszenzmikroskopie, große Vorzüge auf. Es ist jedoch damit nicht möglich, Informationen über das Anregungsspektrum, d.h. die spektrale Verteilung des Ausmaßes, in welchem Beleuchtungsstrahlung mit einer Probe wechselwirken kann, z.B. absorbiert werden kann, zu ermitteln. Dies ist jedoch neben dem Emissionsspektrum eines Stoffes eine wesentliche Materialeigenschaft, die zur Charakterisierung einer Probe bzw. zur Identifizierung bestimmter Bestandteile einer Probe herangezogen werden kann.

Derartige Information ist, beispielsweise im Fall einer Fluoreszenzmessung, mit dem bekannten Spektrometer nur durch Anwendung des folgenden, bekannten Verfahrens erhältlich: Zunächst wird die spektrale Verteilung der Beleuchtungsstrahlung möglichst stark eingeschränkt, d.h. die Probe wird mit äußerst schmalbandigem Licht, wie es beispielsweise durch entsprechende Bandpassfilter oder durch Verwendung schmalbandiger Laserlinien erhältlich ist, beleuchtet. Liegt die Beleuchtungsstrahlung wenigstens teilweise im Bereich des Anregungsspektrums, wird die Probe entsprechend zu Fluoreszenz angeregt. Alsdann wird, wie oben beschrieben, eine Folge von Aufnahmen mit unterschiedlichen Einstellungen der optischen Weglängendifferenz im Interferometer durchgeführt und die oben geschilderten Berechnungen angestellt, d.h. es wird ein Emissionsspektrum aufgenommen. Anschließend wird dieselbe Messung und Berechnung mit einer anderen, ebenfalls sehr schmalbandigen Spektralverteilung der Beleuchtungsstrahlung wiederholt. Dieses Verfahren wird so oft wiederholt, bis das gesamte, interessierende Spektrum der Beleuchtungsstrahlung durchgefahren ist. Vergleich der den unterschiedlichen Beleuchtungswellenlängen und -intensitäten zugeordneten Emissionsspektren liefert dann das gesuchte Anregungsspektrum. Nachteilig bei diesem Verfahren ist der erhebliche Zeitaufwand, der zugleich mit einer starken Strahlungsbelastung der Probe einhergeht. Insbesondere empfindliche biologische Proben sind daher mit dem bekannten Verfahren bzw. der bekannten Vorrichtung nur schwer erfassbar. Auch Veränderungen der Probe mit der Zeit, wie Sie gerade im Bereich der Biologie von Interesse sind, sind mit dem bekannten Verfahren und der bekannten Vorrichtung nicht erfassbar.

Es ist daher eine Aufgabe der vorliegenden Erfindung, ein gattungsgemäßes Spektrometer derart weiterzubilden, dass Informationen sowohl über das Anregungs- wie auch das Emissionsspektrum der Probe bei verminderter Strahlungsbelastung und kürzerer Messzeit erhältlich sind.

Es ist eine weitere Aufgabe der vorliegenden Erfindung, ein gattungsgemäßes Messverfahren derart weiterzubilden, dass Informationen sowohl über das Anregungs- wie auch das Emissionsspektrum der Probe bei verminderter Strahlungsbelastung und kürzerer Messzeit erhältlich sind.

Die erstgenannte Aufgabe wird in Verbindung mit den Merkmalen des Oberbegriffs von Anspruch 1 dadurch gelöst, dass das Interferometer in einem dem Beleuchtungsstrahlengang und dem Beobachtungsstrahlengang gemeinsamen Strahlengangbereich angeordnet ist, sodass sich durch die Änderung der effektiven Weglängendifferenz im Beobachtungsstrahlengang auch die effektive Weglängendifferenz im Beleuchtungsstrahlengang ändert.

Die zweitgenannte Aufgabe wird in Verbindung mit den Merkmalen des Oberbegriffs von Anspruch 7 dadurch gelöst, dass auch Beleuchtungsstrahlung dasselbe Interferometer durchläuft, sodass sich durch die Änderung der effektiven Weglängendifferenz im Beobachtungsstrahlengang auch die effektive Weglängendifferenz im Beleuchtungsstrahlengang ändert.

Zur Vermeidung von Wiederholungen sollen das erfindungsgemäße Spektrometer sowie das erfindungsgemäße Verfahren im Folgenden gemeinsam diskutiert werden.

Es ist die Grundidee der Erfindung, dass das Interferometer sowohl von der Beleuchtungsstrahlung als auch der Beobachtungsstrahlung durchlaufen wird, wobei durch Änderung der effektiven Weglängendifferenz sowohl die Beleuchtungsstrahlung als auch die Beobachtungsstrahlung eine Aufspaltung und nachfolgende Wiedervereinigung zur Ausbildung eines Interferenzmusters, wie oben beschrieben, erfährt. Dieser Ansatz erscheint überraschend, da die simultane Änderung mehrerer Verfahrensparameter, nämlich der spektralen Verteilungen von Beleuchtungs- und der Beobachtungsstrahlung, der analysierenden Erfassung des Emissions- und Anregungsspektrums der Probe entgegenzustehen scheint. Er ist dem oben beschriebenen herkömmlichen Ansatz völlig entgegengesetzt. Überraschenderweise zeigt sich jedoch, dass sich bei geeigneter Analyse, auf die nachfolgend detaillierter eingegangen werden soll, sehr wohl die interessierenden Informationen bezüglich des Anregungsspektrums und des Emissionsspektrums einer Probe ermitteln lassen.

Bei dem erfindungsgemäßen Spektrometer ändern sich die spektrale Verteilung der Beobachtungsstrahlung und die spektrale Verteilung der Beleuchtungsstrahlung simultan. Dies erfolgt erfindungsgemäß nicht oder nicht nur infolge einer durch die geänderte Beleuchtung geänderten Probenantwort, sondern (wenigstens auch) im Sinne eines geänderten "Filtereffektes", da die Wirkung des Interferometers auf die Beobachtungsstrahlung durch Änderung der effektiven Weglängendifferenz verändert wird. Dies bedeutet, dass die spektrale Verteilung der Beleuchtungsstrahlung $I_{ex}(k_{ex}, OPD_{ex})$ in einem Punkt der Probe beschrieben werden kann als

$$I_{ex}\left(k_{ex}, OPD_{ex}\right) = \varepsilon_{ex}\left(k_{ex}, OPD_{ex}\right)I_{LS}\left(k_{ex}\right) \qquad (3)$$

wobei $k_{ex}=2\pi/\lambda_{ex}$, die Wellenzahl mit $\lambda_{ex}$ der Wellenlänge der Beleuchtungsstrahlung und $I_{LS}$ die Intensität der Lichtquelle ist. Der Index "*ex*" bei OPD deutet an, dass es sich um diejenige OPD handelt, die zwischen den miteinander interferierenden Anteilen der Beleuchtungsstrahlung liegt. $\varepsilon_{ex}$, der Effekt des Interferometers auf die Beleuchtungsstrahlung, kann analog zu $\varepsilon_{em}$ in Gleichung (2) beschrieben werden, nämlich als

$$\varepsilon_{ex}\left(k_{ex}, OPD_{ex}\right) = \left(1 + m_{ex}\cos\left(k_{ex}, OPD_{ex}\right)\right)/2 \qquad (4)$$

Legt man nun die sinnvolle Annahme zugrunde, dass das Anregungsspektrum $S_{ex}(k_{ex}, OPD_{ex})$ von dem Emis-sionsspektrum $S_{em}(k_{em}, OPD_{em})$ unabhängig ist, kann die von der Probe ausgehende spektrale Intensität beschrieben werden als

$$I_{em}\left(k_{em}, OPD_{em}\right) = S_{em}\left(k_{em}, OPD_{em}\right)\rho \int_0^\infty S_{ex}\left(k_{ex}, OPD_{ex}\right)I_{ex}\left(k_{ex}, OPD_{ex}\right)dk_{ex} \qquad (5)$$

wobei $\rho$ etwa die Fluorophorkonzentration der Probe sein kann. Der Index *em* bei OPD deutet an, dass es sich um diejenige OPD handelt, die zwischen den miteinander interferierenden Anteilen der Probenstrahlung liegt. Man beachte, dass das Anregungsspektrum $S_{ex}$ nicht mit der spektralen Verteilung der Beleuchtungsstrahlung verwechselt werden darf. Vielmehr handelt es sich bei $S_{ex}$ um die beleuchtungsintensitätsunabhängige spektrale Verteilung des Ausmaßes der möglichen Wechselwirkung (z.B. durch Absorption hervorgerufen) zwischen der Probe und verschiedenen Wellenlängen der Beleuchtungsstrahlung.

Einsetzen von Gleichung (5) in Gleichung (1) liefert eine anschauliche Formel für die Beobachtungsstrahlung des erfindungsgemäßen Spektrometers:

$$I_{det}(OPD) = \int_0^\infty \varepsilon_{em}(k_{em}, OPD_{em}) I_{em}(k_{em}, OPD_{em}) \, dk_{em}$$

$$= \rho \int_0^\infty \int_0^\infty \left[ \begin{array}{c} \varepsilon_{em}(k_{em}, OPD_{em}) S_{em}(k_{em}, OPD_{em}) \\ \times S_{ex}(k_{ex}, OPD_{ex}) I_{ex}(k_{ex}, OPD_{ex}) \end{array} \right] dk_{ex} dk_{em}$$

$$= \rho \int_0^\infty \varepsilon_{em}(k_{em}, OPD_{em}) S_{em}(k_{em}, OPD_{em}) \, dk_{em} \qquad (6)$$

$$\times \int_0^\infty \varepsilon_{ex}(k_{ex}, OPD_{ex}) S_{ex}(k_{ex}, OPD_{ex}) I_{LS}(k_{ex}) \, dk_{ex}$$

Es ist eine wesentliche Erkenntnis der Erfindung, dass die in einem solchen Signal enthaltenen Informationen über das Anregungsspektrum und das Emissionsspektrum der Probe isoliert rekonstruiert werden können, so dass das bisher bekannte Verfahren mit separater Messung und separater Spektralanalyse der Beobachtungsstrahlung für verschiedene Beleuchtungswellenlängen wesentlich vereinfacht und auf die Messung einer einzelnen Folge von Intensitätsmesseinheiten bei unterschiedlichen OPDs reduziert werden kann. Anwendung beispielsweise einer Fourier-Transformation auf das Produkt von Gleichung (6) führt nämlich zu

$$FT(I_{det}(OPD)) = \rho[a\delta(k) + (m_{em}/2)S_{em}(k) + (m_{em}/2)S_{em}(-k)]$$
$$\otimes [b\delta(k) + (m_{ex}/2)S_{ex}(k)I_{LS}(k) + (m_{ex}/2)S_{ex}(-k)I_{LS}(-k)]$$

$$(7)$$

$$a = \int_0^\infty S_{em}(k_{em}) \, dk_{em}; \qquad b = \int_0^\infty S_{ex}(k_{ex}) I_{LS}(k_{ex}) \, dk_{ex}$$

$\delta(k)$: Diracsche Delta-Distribution.

Für die weitere Analyse ist es günstig, jedoch nicht notwendig, den Realteil oder den Absolutbetrag der komplexen Fourier-Transformation zu berechnen und dem weiteren Verfahren zugrunde zu legen. Es sei jedoch ausdrücklich darauf hingewiesen, dass auch andere, ein Spektrum erzeugende mathematische Operationen grundsätzlich verwendbar sind.

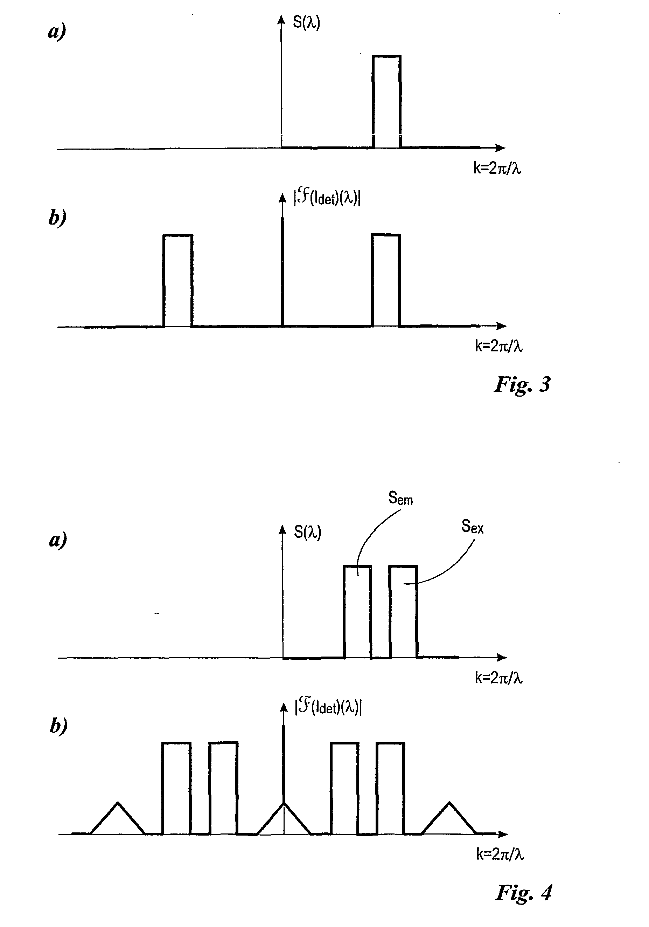

Die beiden Terme von Gleichung (7) lassen sich anschaulich darstellen. Zum Zwecke der Anschauung sei ein vereinfachtes Emissionsspektrum $S_{em}$ angenommen, das in einem zusammenhängenden Wellenlängenbereich einen konstanten Wert aufweist und ansonsten Null ist. Ein solches Spektrum ist in Fig. 3a allgemein als $S(\lambda)$ dargestellt. Der erste Term von Gleichung (7) stellt sich dann gemäß Fig. 3b dar. Der Delta-Peak bei k=0 resultiert aus dem Gleichanteil des Signals, der aufgrund der Tatsache, dass die Intensität der modulierten Emissionsstrahlung nicht negativ werden kann, unvermeidbar ist. Das Emissionsspektrum stellt sich symmetrisch zu k=0 dar. Die Spiegelsymmetrie wird verständlich bei komplexer Exponentialdarstellung der Kosinusfunktion in Gleichung (2).

Auf ähnliche Weise lässt sich der zweite Term von Gleichung (7) darstellen. Hier wurde, ebenfalls zum Zwecke der Anschauung, ein vereinfachtes Anregungsspektrum $S_{ex}$ angenommen, das in einem zusammenhängenden Wellenlängenbereich einen konstanten Wert aufweist und ansonsten Null ist. Zur Anschauung kann auch hier Figur 3a dienen, die jedoch rein schematisch zu verstehen ist (in der Regel wird gegenüber dem Emissionsspektrum eine Verschiebung (die sog. Stokes-Verschiebung) gegeben sein). Der zweite Term von Gleichung (7) lässt sich ebenfalls als Gleichanteil (Delta-Peak bei k=0) und spiegelsymmetrisches Anregungsspektrum $S_{ex}$ darstellen (Fig. 3b).

Die in Gleichung (7) beschriebene Faltung der vereinfachten Spektren von Figur 3, lässt sich anhand von Figur 4 darstellen. Figur 4a zeigt die Anregungs- und das Emissionsspektren $S_{ex}$ und $S_{em}$. Das Anregungsspektrum ist gegenüber dem Emissionsspektrum in nicht-überlappender Weise in den kürzerwelligen Strahlungsbereich verschoben. Diese Annahme, die allerdings keine Voraussetzung für die Erfindung ist, ist z.B. im Bereich der Fluoreszenzspektroskopie realistisch (Stokes-Verschiebung). Das in Fig. 4b gezeigte resultierende Spektrum entspricht in stark vereinfachter Form dem mittels des oben beschriebenen erfindungsgemäßen Verfahrens ermittelten Ergebnisspektrum. Es setzt sich zusammen aus:

a) einem Delta-Peak bei k=0 (Faltung der der einzelnen Delta-Peaks)

b) den spiegelsymmetrischen Spektren $S_{ex}$ und $S_{em}$ (Faltung von $S_{ex}$ bzw. $S_{em}$ mit dem Delta-Peak des jeweils anderen Terms Gleichung 7),

c) einem als Dreieck dargestellten, zentralen Differenzspektrum um k=0, das aus den Faltungen der jeweils spiegelsymmetrischen Anteile von $S_{ex}$ und $S_{em}$ resultiert, und

d) zwei spiegelsymmetrischen, ebenfalls als Dreiecke dargestellten Summenspektren, das aus der Faltung von $S_{ex}$ mit $S_{em}$ resultieren.

Je nach Intension des Experimentators kann das in Figur 4 dargestellte Ergebnisspektrum unter Zuhilfenahme *a priori* bekannter, zusätzlicher Informationen bezüglich des Geräteaufbaus weiter genutzt werden.

Bei einer vorteilhaften Ausführungsform des erfindungsgemäßen Verfahrens bei dem eine fluoreszierende, d.h. Fluorophore enthaltene Probe verwendet wird, ist es günstig, durch geeignete Filter und / oder Farbteilerspiegel die möglichen Spektralverteilungen des Beleuchtungs- und des Beobachtungslichtes weitgehend von einander zu separieren und an die erwarteten Anregungs- und Emissionsspektren der Probe anzupassen. Mit einer solchen *a priori*-Kenntnis der möglichen Spektralverteilungen von Beleuchtungsstrahlung und / oder Beobachtungsstrahlung kann die sich ergebende Folge von Spektraldateneinheiten (siehe z.B. Figur 4) in unterschiedliche Spektraldatensegmente entlang der Spektralachse segmentiert werden. Bei bildgebenden Anwendungen kann die Segmentierung entlang des Spektrum-Bildstapels für verschiedene Pixel unterschiedlich vorgenommen werden. Eine derartige Segmentierung kann direkt zu dem gewünschten Anregungs- und Emissionsspektrum führen. Diese Daten können z.B. mit gespeicherten Referenzwerten verglichen werden, was eine Identifizierung von in dem entsprechenden Punkt der Probe vorhandenen Fluorophoren-Spezies ermöglicht.

Man beachte, dass die oben erläuterte Berechnung von Spektral-Dateneinheiten zwar in bestimmten Fällen vorteilhaft, für die Erfindung jedoch nicht notwendig ist, da der gesamte Informationsgehalt bereits in den erfindungsgemäß aufgenommenen "Rohdaten", d.h. in der aufgenommenen Folge von Intensitäts-Messwerteinheiten enthalten ist. So lässt sich, z.B. durch Anwendung eines als "linear unmixing" bekannten Verfahrens, welches im Wesentlichen die Aufstellung und Berechnung eines linearen Gleichungssystems unter Verwendung von gespeicherten Daten, welche möglicherweise in der Probe enthaltene Bestandteile charakterisieren, umfasst, die Zusammensetzung der Probe, insbesondere Konzentrationen einzelner Bestandteile aus den Rohdaten berechnen bzw. abschätzen. Bei einfachen Anwendungen können auch mehrere Intensitäts-Messwerteinheiten und / oder Relationen von Intensitätsmesswerteinheiten mit gespeicherten Daten verglichen werden, um Aussagen über die Probe bzw. Probenbestandteile zu erlauben (z.B. Klassifikation). Diese Variante bietet sich insbesondere bei zeitkritischen Anwendungen an, bei denen innerhalb kurzer Zeit nur wenige Messwerteinheiten aufgenommen und die Auswertungszeit möglichst kurz gehalten werden sollen.

Eine andere Nutzungsform der ermittelten Folge von Spektraldateneinheiten ist es, eine Spektraldateneinheit oder eine Teilfolge von Spektraldateneinheiten aus einem allein der Beleuchtungsstrahlung, insbesondere dem Anregungsspektrum, zuordenbaren Spektraldatensegment zur Darstellung einer interessierenden Objektebene der Probe zu nutzen. Dieser Anwendung liegt ein besonderer Vorteil der erfindungsgemäßen Verfahrens und der erfindungsgemäßen Vorrichtung zugrunde.

Die durch die Interferenz im Beleuchtungsstrahlengang sich ergebende Modulationstiefe $m_{ex}$ des Interferenzmusters der Beleuchtungsstrahlung in der Probe ändert sich je nach spezieller Wahl der Strahlleitmittel (z.B. Linsen, Spiegel, Strahlteiler etc.) in Richtung der einfallenden Strahlung. Insbesondere ist die Modulationstiefe in der Fokalebene der Probe besonders hoch. Außerhalb dieser Fokalebene nimmt die Modulationstiefe des Interferenzmusters rasch ab. Da die Gesamtintensität der Beleuchtungsstrahlung im Wesentlichen gleich bleibt, äußert sich dieser Umstand in Gleichung (7) darin, dass im zweiten Term von Gleichung (7) der Delta-Peak bei k=0 außerhalb der Fokalebene zu Lasten der übrigen Summanden wächst. Dies bedeutet, dass Licht, welches zum Aufbau des zweiten und dritten Summanden im zweiten Term von Gleichung (7) beiträgt, d.h. zu der spiegelbildlichen Darstellung des Anregungsspektrums in der Ergebnisfolge von Spektraldateneinheiten, im Wesentlichen nur aus der Fokalebene stammt. Licht von außerhalb der Fokalebene trägt dagegen stärker zu dem Delta-Peak bei k=0 bei. Mit Hilfe des erfindungsgemäßen Verfahrens und der erfindungsgemäßen Anordnung ist es daher möglich, ein optisches Schnittbild durch die Probe zu erhalten, wie es ansonsten lediglich durch sehr aufwendige Techniken, wie beispielsweise konfokale Laser-Scanning-Anwendungen bekannt ist. Zusätzlich zu der Spektralinformation kann man also aufgrund der vorliegenden Erfindung eine deutlich verbesserte räumliche Auflösung beispielsweise bei mikroskopischen Anwendungen erhalten.

Eine vergleichbare Anwendung der spektralen Segmentierung zur Erzeugung optisch geschnittener Daten aus Bereichen des Emissionsspektrums ist nicht ohne weiteres möglich, da die Modulationstiefe $m_{em}$ der Beobachtungsstrahlung nicht von einer Position in der Probe abhängig ist. Es ist jedoch möglich, eine erste Spektraldateneinheit oder eine Folge erster Spektraldateneinheiten aus einem allein der Beleuchtungsstrahlung, insbesondere dem Anregungsspektrum, zuordenbaren Spektraldatensegment derart mit einer zweiten Spektraldateneinheit oder einer Folge von zweiten Spektraldateneinheiten aus einem dem Beobachtungsstrahlung, insbesondere dem Emissionsspektrum, zuordenbaren Spektraldatensegment zu einer berechneten Spektraldateneinheit zu verrechnen, dass die berechnete Spektraldateneinheit zur Darstellung der interessierenden Objektebene der Probe dient. Bei einem bildgebenden Spektrometer kann dabei die Kenntnis der in Gleichung (7) beschriebenen Verhältnisse zu einer detaillierten Entfaltung herangezogen werden. Bei einfachen Anwendungen kann auch die räumliche Information aus einem optisch geschnittenen Bild aus dem Bereich des Anregungsspektrum verwendet werden, um ein Bild aus dem Bereich des Emissionsspektrums zu maskieren. Dabei ist zu beachten, dass dies kein optisches Schneiden im eigentlichen Sinn darstellt, da bei der einfachen Maskierung ohne geeignete Entfaltung weiterhin auch Lichtanteile aus Ebenen außerhalb der Fokalebene zum Signal beitragen.

Auf ähnliche Weise lassen sich auch Bereiche der Ergebnisfolge von Spektraldateneinheiten, die sowohl der Beleuchtungsstrahlung, insbesondere dem Anregungsspektrum, wie auch der Beobachtungsstrahlung, insbesondere dem Emissionsspektrum, zuordenbar sind, d.h. die Summen- und / oder Differenzspektren, miteinander oder mit einem allein der Beobachtungsstrahlung, insbesondere dem Emissionsspektrum, zuordenbaren Bereich der Ergebnisfolge von Spektraldateneinheiten durch geeignete Entfaltung zur Erzeugung optisch geschnittener Daten verrechnen.

Für die konkrete Ausgestaltung der erfindungsgemäßen Anordnung gibt es verschiedene Ansätze. Besonders günstig ist es, wenn die zwei Wege, auf denen die zwei Strahlungsanteile, in die das Interferometer eine als paralleles Strahlungsbündel einfallende Interferometer-Eingangsstrahlung aufspaltet, abhängig von der eingestellten effektiven Weglänge identisch oder einander eng benachbart sind und von den zwei Strahlungsanteilen in zueinander unterschiedlichen Laufrichtungen durchlaufen werden. Dies ist beispielsweise bei einem Sagnac-Interferometer der Fall. Das Sagnac-Interferometer hat gegenüber anderen Interferometertypen, beispielsweise einem Michelson-Interferometer den Vorteil kompakter und besonders robuster Bauweise.

Zur Änderung der effektiven Weglängendifferenz in einem Sagnac-Interferometer ist es günstig, das gesamte Interferometer um eine zu Beleuchtungs- und Beobachtungsstrahlengang senkrechte Achse durch den Interferometer-Strahlteiler zu schwenken. Dabei bleiben die geometrischen Verhältnisse zwischen den einzelnen Komponenten des Interferometers erhalten.

Bevorzugt sind in dem Beobachtungsstrahlengang und in dem Beleuchtungsstrahlengang abbildende Strahlungsleitmittel vorgesehen sind, sodass unterschiedliche Punkte einer räumlich beschränkten Leuchtfläche einer virtuellen Bildfeldebene der Strahlungsquelle unterschiedlichen Punkten der Probe und unterschiedliche Punkte der Probe unterschiedlichen Punkten des Detektors zuordenbar sind. Dies ermöglicht insbesondere eine bildgebende Anwendung des erfindungsgemäßen Spektrometers. Die Leuchtfläche in der virtuellen Bildfeldebene ist üblicherweise ein einer homogenen Beleuchtungsquelle äquivalenter Bereich, der z.B. mit Hilfe von Linsen und / oder Blenden aus einer strukturierten Beleuchtungsquelle geschaffen wird, um die Abbildung von Lichtquellenstrukturen auf die Probe zu verhindern. Die virtuelle Bildfeldebene kann selbstverständlich auch mit einer realen Ebene der Beleuchtungsquelle, z.B. einer homogen leuchtenden Mattscheibe zusammenfallen.

Bei der besonders bevorzugten Verwendung eines Sagnac-Interferometers in Kombination mit bildgebender Anwendung ist zu beachten, dass unterschiedlichen Punkten unterschiedliche effektive Weglängendifferenzen zuzuordnen sind. Mit Verschwenken des Interferometers wird also keinesfalls eine einheitliche effektive Weglängendifferenz für das gesamte Bild verändert, sondern vielmehr die effektiven Weglängen für jeden einzelnen Bildpunkt. Gleichwohl soll zur Vereinfachung des Ausdrucks im Rahmen dieser Beschreibung von einer Änderung "der effektiven Weglängendifferenz" gesprochen werden.

Vorteilhafterweise ist die Leuchtfläche der Beleuchtungsquelle relativ zur Symmetrieachse des Beleuchtungsstrahlengangs versetzt angeordnet, sodass aus einem Punkt der Leuchtfläche stammende und dem zugeordneten Punkt der Probe nicht als Beleuchtungsstrahlung zugeführte sondern von dem Interferometer rückreflektierte Strahlung in eine Richtung abgestrahlt wird, die von derjenigen Richtung verschieden ist, in die von dem zugeordneten Punkt der Probe stammende Beobachtungsstrahlung als Interferometer-Ausgangsstrahlung abgestrahlt wird. Mit anderen Worten wird Strahlung der Beleuchtungsquelle schräg in das Interferometer eingekoppelt. Dies hat den Vorteil, dass die Beleuchtungsstrahlung, die nicht auf die Probe gelenkt wird, sondern von dem Interferometer-Strahlteiler zurückreflektiert wird, nicht auf den Detektor gelangt oder zumindest nicht auf den gleichen Bereich des Detektors gelangt wie die Beobachtungsstrahlung. Dies würde nämlich zu ungewollten Interferenzen zwischen Beleuchtungs- und Beobachtungsstrahlung auf dem Detektor führen, was zu einer Verfälschung der Messergebnisse führen würde. Außerdem würde sich durch das zusätzliche Licht das Signal/Rausch-Verhältnis ungünstig ändern.

Die Versetzung erfolgt vorzugsweise um einen Betrag, der in etwa der halben Ausdehnung der Leuchtfläche entspricht. Auf diese Weise wird der Überlappungsbereich zwischen Beobachtungsstrahlung und rückreflektierter Beleuchtungsstrahlung auf dem Detektor minimiert und gleichzeitig die Abweichungen von der Symmetrie klein gehalten. Die Versetzung kann so erfolgen, dass sich ein Schrägeinfall des Beleuchtungslichtes in einer Ebene ergibt, in welcher der Beleuchtungs- und der Beobachtungsstrahlengang im Wesentlichen verlaufen; vorzugsweise erfolgt die Versetzung jedoch zumindest auch senkrecht zu dieser Ebene. Ein ähnlicher Effekt kann auch durch Verkippen der Strahlungsleitmittel, insbesondere der Spiegel, in dem Interferometer erreicht werden.

Eine spezielle Ausführungsform eines solchen Interferometers zeichnet sich dadurch aus, dass die Strahlleitmittel des Interferometers zwei Spiegel umfassen, die unter einem Winkel von etwa 45° zueinander in den beiden, die Hypotenuse eines gleichschenkligen, rechtwinkligen Dreiecks begrenzenden Eckpunkten angeordnet sind, in dessen drittem Eckpunkt der Interferometer-Strahlteiler angeordnet ist. Selbstverständlich sind auch andere Winkelanordnungen wählbar, beispielsweise eine 120°-Anordnung. Die bevorzugte Ausführungsform hat jedoch den Vorteil, dass sie der üblichen Strahlführung in Fluoreszenzmikroskopen angepasst ist, so dass ein Einsatz in diesem wichtigen Aufgabenfeld besonders einfach erscheint.

Dabei ist es vorteilhaft, wenn der Interferometer-Strahlteiler im dritten Eckpunkt angeordnet und in etwa entlang der Winkelhalbierenden ausgerichtet ist. Noch günstiger ist es jedoch, wenn, wie oben diskutiert der Interferometer-Strahlteiler gegenüber der Winkelhalbierenden geringfügig geneigt ist. Einstellung dieser Neigung beeinflusst die Rate der OPD-Änderung bei Verschwenkung des Interferometers.

Weitere Vorteile der Erfindung ergeben aus der nachfolgenden speziellen Beschreibung und den beigefügten Zeichnungen, in denen

Figur 1:  schematisch ein erfindungsgemäßes Spektrometer zur bildgebenden, fluoreszenzmikroskopischen Anwendung zeigt,

Figur 2:  schematisch ein Spektrometer nach dem Stand der Technik zur bildgebenden, fluoreszenzmikroskopischen Anwendung zeigt,

Figur 3:  vereinfachte Emissions- bzw. Anregungsspektren sowie die Veranschaulichungen der entsprechenden Terme von Gleichung (7) zeigt,

Figur 4:  vereinfachte Emissions- und Anregungsspektren sowie die Veranschaulichungen das resultierende Faltungsprodukt von Gleichung (7) zeigt und

Figur 5:  schematisch einen Ausschnitt aus dem Strahlengang des erfindungsgemäßen Spektrometers im Bereich des Interferometers zeigt.

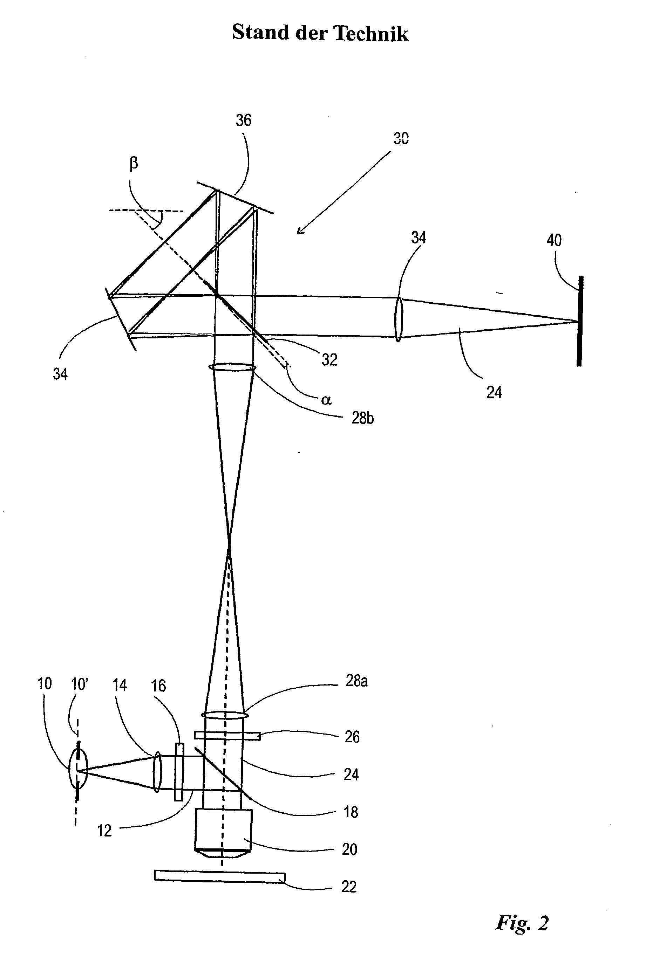

Figur 2 zeigt schematisch den Aufbau eines Spektrometers nach dem Stand der Technik zur bildgebenden fluoreszenzmikroskopischen Anwendung. Von einer Lichtquelle 10 wird die Beleuchtungsstrahlung 12 über eine geeignete Strahlaufweitung 14, einen Kurzpassfilter 16 und einen Farbteilerspiegel 18 parallel in die rückwärtige Apertur eines Mikroskopobjektivs 20 eingekoppelt, um eine vor der vorderen Apertur des Mikroskopobjektivs 20 liegende Probe 22 zu beleuchten. Die Probe 22 ist in Figur 2 schematisch als ein mikroskopischer Objektträger dargestellt. Man beachte, dass der dargestellte Strahlengang rein schematisch zu verstehen ist. Insbesondere werden in der Regel keine Strukturen der Lichtquelle 10 sondern eine mit dem Bezugszeichen 10' angedeutete virtuelle Bildfeldebene in die Probenebene abgebildet, um dort eine gleichmäßige Beleuchtung erzielen.

Überlappt die spektrale Verteilung des Beleuchtungslichtes das Anregungsspektrum von Fluorophoren der Probe, wird in den Fluorophoren über bekannte Fluoreszenzmechanismen eine Emissionsstrahlung ausgelöst, deren spektrale Verteilung dem Emissionsspektrum der betreffenden Fluorophore entspricht. Das Emissionsspektrum ist in der Regel aufgrund der sogenannten Stokes-Verschiebung längerwellig als das Anregungsspektrum. Emissionslicht aus einer Fokalebene der Probe wird von dem Mikroskopobjektiv parallelisiert und kann bei geeigneter Wahl des Farbteilers 18 diesen sowie einen nachfolgenden Langpassfilter 26 als Beobachtungslicht passieren. Mittels einer schematisch als zwei Linsen 28A und 28B dargestellten, optionalen Koppeloptik wird die Beobachtungsstrahlung in ein Sagnac-Interferometer 30 eingekoppelt. Das Sagnac-Interferometer besteht aus einem vorzugsweise als halbdurchlässiger Spiegel oder Strahlteilerwürfel ausgebildeten Strahlteiler 32, welcher das einfallende Licht in zwei Strahlungsanteile aufspaltet. Ein erster Strahlungsanteil wird an dem Strahlteiler 32 auf einen ersten Spiegel 34 reflektiert, von dort auf einen zweiten Spiegel 36 weitergeleitet und fällt schließlich erneut auf den Strahlteiler 32, wobei ein hier reflektierter Teil mittels einer Abbildungsoptik 34 auf einen Flächendetektor 40, z.B. eine CCD-Kamera, abgebildet wird.

Ein zweiter Teil des von der optionalen Einkoppeloptik 28A, 28B auf den Strahlteiler geleiteten Lichtes wird durchgelassen, fällt zunächst auf den zweiten Spiegel 36, wird von diesem auf den ersten Spiegel 34 reflektiert und erreicht schließlich wieder den Strahlteiler 32, von dem ein Teil dieses Lichtes durchgelassen wird und mittels der Abbildungsoptik 34 auf den Flächendetektor 40 abgebildet wird.

Die beiden Strahlungsanteile durchlaufen also im Wesentlichen denselben Weg in dem Interferometer, jedoch in unterschiedlichen Richtungen. Es ist zu beachten, dass der exakt selbe Weg nur bei exakt symmetrischer Ausrichtung der Spiegel 34 und 36 und des Strahlteilers 32 durchlaufen wird. Üblicherweise ist jedoch der Strahlteiler 32 um einen Winkel $\alpha$ geringfügig gegen die symmetrische Stellung geneigt. Die beiden Anteile, in die der Strahlteiler 32 die einfallende Beobachtungsstrahlung 24 aufspaltet, interferieren daher miteinander und bilden auf dem Detektor 40 ein entsprechendes Interferenzmuster aus. Zur Änderung der OPD wird das gesamte Interferometer 30 um die eine Achse durch den Strahlteiler 32 verschwenkt (angedeutet durch den Winkel $\beta$). Der Winkel $\alpha$ hat dabei die Funktion eines "Vorspannwinkels", der die Rate der OPD-Änderung bei Änderung des Winkels $\beta$ bestimmt. Aufnahme mehrerer Bilder, d.h. mehrfaches Auslesen des Detektors 40 bei unterschiedlichen Einstellungen des Winkels $\beta$ führt zu einem Bildstapel entlang einer Interferometereinstellungsparameter-Achse, bei dem die Pixel der einzelnen Bilder zueinander korrespondieren.

Wie bereits im allgemeinen Teil der Beschreibung erläutert, führt beispielsweise eine pixelweise Fourier-Transformation über den Bildstapel entlang der Interferometereinstellungsparameter-Achse zu dem gesuchten Emissionsspektrum.

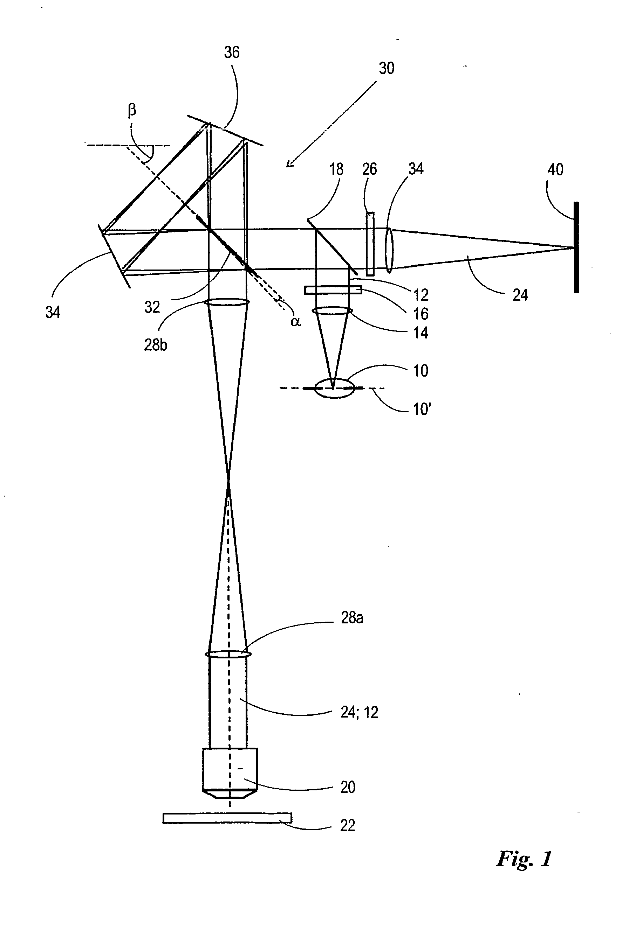

Figur 1 zeigt den Aufbau eines erfindungsgemäßen Spektrometers zur bildgebenden fluoreszenzmikroskopischen Anwendung. Benennung und Darstellung gleicher Einzelteile sind aus Gründen des leichteren Vergleichs in Figur 1 und Figur 2 gleich gestaltet. Zur Vermeidung von Wiederholungen sollen daher nur die erfindungsgemäßen Unterschiede diskutiert werden.

Der Aufbau des erfindungsgemäßen Spektrometers unterscheidet sich von dem Aufbau des Spektrometers nach dem Stand der Technik im Wesentlichen durch die Anordnung der Lichtquelle 10, 10' und ihrer Einkopplung 14, 16, 18 in das System. Diese einfach erscheinende Variation ist keineswegs trivial, sondern führt zu entscheidenden Änderungen in der Funktion des Spektrometers und liefert, wie oben bereits erläutert, erhebliche Vorteile gegenüber dem Stand der Technik.

Die Einkopplung des Beleuchtungslichtes 12 erfolgt "vor" dem Interferometer 30. Das bedeutet, dass das Interferometer 30 in einem dem Beleuchtungsstrahlengang und dem Beobachtungsstrahlengang gemeinsamen Strahlengangbereich angeordnet ist.

Beleuchtungsstrahlung, die von dem Mikroskopobjektiv 20 in einem Punkt der Fokalebene der Probe 22 abgebildet wird, fällt bei dem gezeigten Ausführungsbeispiel als von der Optik 14 parallelisiertes Strahlenbündel auf den Strahlteiler 32. Analog zu der oben erläuterten Aufspaltung und Wiedervereinigung des Beobachtungslichtes wird bei dem erfindungsgemäßen Spektrometer auch das Beleuchtungslicht in dem Interferometer 30 aufgespalten und interferierend wieder überlagert. Die Probe 22 wird daher mit einem OPD-abhängigen Interferenzmuster beleuchtet, welches in der Fokalebene eine besonders große Modulationstiefe aufweist, die in Richtung der optischen Achse mit Entfernung von der Fokalebene bei breitbandiger Beleuchtung rasch abfällt.

Bezüglich des Beobachtungslichtes ergeben sich keine funktionalen Unterschiede zu dem Spektrometer nach dem Stand der Technik. Die geänderte Anordnung des Langpassfilters 26 ist eine notwendige Konsequenz aus der frühen Einkopplung des Beleuchtungslichtes.

Eine entscheidende Konsequenz aus der Neugestaltung der Strahlengänge bei dem erfindungsgemäßen Spektrometer ist, dass bei einer Verschwenkung des Interferometers 30 zur Variation der OPD in dem Interferometer das Beleuchtungslicht und das Beobachtungslicht simultan betroffen sind. Eine unabhängige Variation des Lichtes in einem der Strahlengänge ist nicht möglich. Dies führt zu den im allgemeinen Teil der Beschreibung erläuterten Wirkungen und Vorteilen der Erfindung.

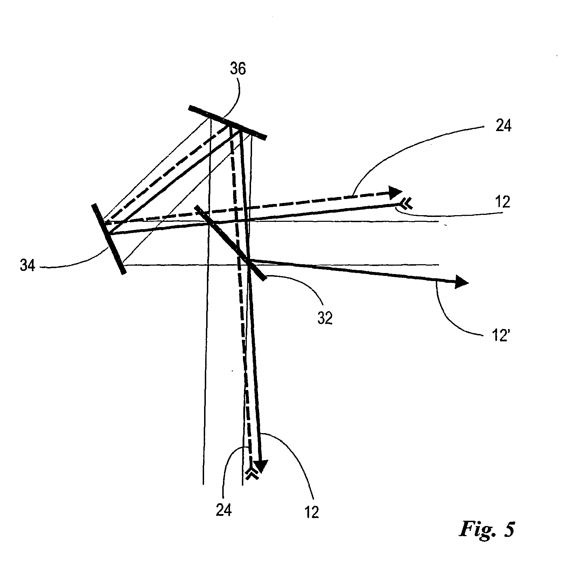

Figur 5 schließlich zeigt eine schematische Darstellung des Interferometers 30 des erfindungsgemäßen Spektrometers in einer besonders günstigen Ausführungsform. Diese Ausführungsform eignet sich zur Vermeidung von Überlagerungen von Beobachtungslicht mit rückreflektiertem Beleuchtungslicht auf dem Detektor. In den gemeinsamen Bereichen von Beleuchtungs- und Beobachtungsstrahlengang außerhalb des Interferometers 30 werden Beobachtungslicht und Beleuchtungslicht, welche aus einem Punkt der Fokalebene in der Probe stammen bzw. diesen Punkt beleuchten, antiparallel geführt. Dies gilt auch im Fall der Ausführungsform von Figur 5, wie durch die Pfeile 12 und 24 dargestellt. Beleuchtungslicht 12, welches das Interferometer durchläuft, trifft am Interferometerausgang erneut auf den Interferometer-Strahlteiler 32. Dort wird wegen des halbdurchlässigen Charakters des Strahlteilers 32 nur ein Teil des Lichtes transmittiert und zur tatsächlichen Beleuchtung der Probe verwendet. Ein anderer Teil wird an dem Strahlteiler 32 rückreflektiert. Bei vollkommen symmetrischem Einkopplung des Lichtes (angedeutet durch die dünnen, durchgezogenen Linien) würde diese Rückreflexion antiparallel zu der in das Interferometer 30 eingekoppelten Beleuchtungsstrahlung 12 und damit parallel zu der aus dem Interferometer ausgekoppelten Beobachtungsstrahlung 24 erfolgen. Dies würde zu unerwünschten Überlagerungen auf dem Detektor führen. Eine symmetrische Einkopplung wird daher vorzugsweise vermieden. Vielmehr wird das Beleuchtungslicht, wie in Fig. 12 dargestellt, schräg eingekoppelt, was durch eine exzentrische Versetzung der Leuchtfläche der Beleuchtungsquelle realisiert werden kann. Durch diese Abweichung von der Symmetrie wird das rückreflektierte Beleuchtungslicht 12' in eine leicht unterschiedliche Richtung abgelenkt. Je nach Größe der Abweichung von der Symmetrie kann auf diese Weise vermieden werden, dass das rückreflektierte Beleuchtungslicht 12' den Detektor überhaupt erreicht. Zumindest fällt es lediglich auf einen Bereich des Detektors, in dem die interessierende Beobachtungsstrahlung nicht abgebildet wird. Man beachte, dass in Fig. 5 nur ein Schrägeinfall des Beleuchtungslichtes in der Papierebene dargestellt werden kann, die einer Ebene entspricht, in der der Beleuchtungs- und der Beobachtungsstrahlengang im Wesentlichen verlaufen. Vorteilhafter Weise erfolgt der Schrägeinfall des Beleuchtungslichtes jedoch zumindest auch senkrecht zu dieser Ebene. Weitere Hilfsmaßnahmen wie Blenden, weitere Strahlteiler, Polarisationsfilter etc. können hinzugezogen werden, um die Trennung der Strahlungsanteile zu vervollkommnen. Bei der Verwendung von Polarisationsfiltern können insbesondere in Kombination mit dem Filter 16 ein Polarisator und in Kombination mit dem Filter 26 ein Analysator eingesetzt werden.

Obgleich die Erfindung, insbesondere anhand von bildgebenden Anwendungen der Fluoreszenzspektroskopie und insbesondere für fluoreszenzmikroskopische Anwendungen erläutert wurde, ist ihr möglicher Anwendungsbereich keineswegs hierauf beschränkt. Alle erläuterten Prinzipien sind prinzipiell auch auf eindimensionale, d.h. nicht bildgebende Anwendungen übertragbar. Auch lässt sich die Erfindung auf andere Wechselwirkungsarten als Fluoreszenz anwenden, beispielsweise auf Streuung, Reflexion, Raman-Spektroskopie etc. Schließlich besteht auch keine Beschränkung auf optische Strahlung. Bei Verwendung der Erfindung im nichtoptischen Bereich sind hinsichtlich der Strahlungsleitmittel entsprechende Anpassungen vorzunehmen, die dem jeweiligen Fachmann unter Zugrundelegung der hier offenbarten Leere offensichtlich sind. Grundsätzlich liegt auch keine Beschränkung auf elektromagnetische Strahlung vor. Vielmehr können die hier erläuterten Prinzipien auch auf Bereiche der Teilchenstrahlung übertragen werden. Hinsichtlich der konkreten technischen Ausführungen hat der Fachmann ein breites Spektrum an Modifikationsmöglichkeiten an der Hand. So sind unterschiedlichste Detektorformen und -arten, wie etwa CCD, CID, Dioden-Arrays, Quadrant-Anoden-Photomultiplier etc. einsetzbar. Soweit in dieser Beschreibung im Rahmen bildgebender Anwendungen von Pixeln oder Bildpunkten die Rede ist, sind damit nicht notwendig die kleinsten durch den Detektor vorgegebenen Bildeinheiten gemeint. Vielmehr sind darunter sämtliche realisierbaren Bildunterteilungen zu verstehen. Insbesondere sind die Begriffe "Bildstapel" und "Bild" auch auf nicht-reguläre Koordinatensysteme erweiterbar. Bezüglich der konkreten mathematischen Operationen, die zur Nutzung der mittels der erfindungsgemäßen Vorrichtung und des erfindungsgemäßen Verfahren gewonnenen Daten einzusetzen sind, hat der Fachmann ebenfalls ein weites Spektrum an Variationsmöglichkeiten an der Hand, die vor allem an der gewünschten experimentellen Aussage zu orientieren sind.

**Patentansprüche**

1. Anordnung zur spektral auflösenden Erfassung einer mit einer Beleuchtungsstrahlung (12) beleuchteten Probe (22) durch Detektion einer von der Probe (22) ausgehenden Probenstrahlung (24),

   - mit einem Beleuchtungsstrahlengang, über den Beleuchtungsstrahlung (12) der Probe (22) von einer Beleuchtungsquelle (10, 10') her zuführbar ist, und
   - mit einem Beobachtungsstrahlengang, über den Probenstrahlung (24) einem Detektor (40) als Beobachtungsstrahlung zuführbar ist,

   wobei in einem die Probe (22) nicht umfassenden Teil des Beobachtungsstrahlengangs ein Interferometer (30) angeordnet ist, welches

   - einfallende Interferometer-Eingangsstrahlung mittels eines Interferometer-Strahlteilers (32) in zwei Strahlungsanteile aufspaltet,
   - diese über zwei Wege, die Strahlungsleitmittel (34, 36) aufweisen und deren effektive Weglängendifferenz änderbar ist, leitet und
   - sie miteinander interferierend zu einer Interferometer-Ausgangsstrahlung überlagert,

   sodass die Spektralverteilung der in einem Punkt des Detektors (40) auftreffenden Beobachtungsstrahlung (24) durch Änderung der effektiven Weglängendifferenz änderbar ist,
   **dadurch gekennzeichnet,**
   **dass** das Interferometer (30) in einem dem Beleuchtungsstrahlengang und dem Beobachtungsstrahlengang gemeinsamen Strahlengangbereich angeordnet ist, sodass sich durch die Änderung der effektiven Weglängendifferenz im Beobachtungsstrahlengang auch die effektive Weglängendifferenz im Beleuchtungsstrahlengang ändert.

2. Anordnung nach Anspruch 1, **dadurch gekennzeichnet, dass** die Probe (22) Fluorophore enthält, die durch Anregung mittels als Beleuchtungsstrahlung dienenden Anregungslichtes (12) zur Emission von als Beobachtungsstrahlung dienendem Fluoreszenzlicht (24) anregbar sind.

3. Anordnung nach einem der vorangehenden Ansprüche, **dadurch gekennzeichnet, dass** die zwei Wege, auf denen die zwei Strahlungsanteile, in die das Interferometer (30) eine als paralleles Strahlungsbündel einfallende Interferometer-Eingangsstrahlung aufspaltet, abhängig von der eingestellten effektiven Weglänge identisch, überlappend oder einander eng benachbart sind und von den zwei Strahlungsanteilen in zueinander unterschiedlichen Laufrichtungen durchlaufen werden.

4. Anordnung nach einem der vorangehenden Ansprüche, **dadurch gekennzeichnet, dass** zur Änderung der effektiven Weglängendifferenz das Interferometer (30) schwenkbar gelagert ist.

5. Anordnung nach einem der vorangehenden Ansprüche, **dadurch gekennzeichnet, dass** in dem Beobachtungsstrahlengang und in dem Beleuchtungsstrahlengang abbildende Strahlungsleitmittel (14; 20; 28a, 28b; 34) vorgesehen sind, sodass unterschiedliche Punkte einer räumlich begrenzten Leuchtfläche in einer virtuellen Bildfeldebene (10') der Beleuchtungsquelle (10) unterschiedlichen Punkten der Probe (22) und unterschiedliche Punkte der Probe (22) unterschiedlichen Punkten des Detektors (40) zuordenbar sind.

6. Anordnung nach Anspruch 5, **dadurch gekennzeichnet, dass** die Leuchtfläche der Beleuchtungsquelle (10) relativ zur Symmetrieachse des Beleuchtungsstrahlengangs versetzt angeordnet ist, sodass aus einem Punkt der Leuchtfläche stammende und dem zugeordneten Punkt der Probe (22) nicht als Beleuchtungsstrahlung (12) zugeführte sondern von dem Interferometer (30) rückreflektierte Strahlung (12') in eine Richtung abgestrahlt wird, die von derjenigen Richtung verschieden ist, in die von dem zugeordneten Punkt der Probe (22) stammende Beobachtungsstrahlung (24) als Interferometer-Ausgangsstrahlung abgestrahlt wird.

7. Verfahren zur spektral auflösenden Erfassung einer mit einer Beleuchtungsstrahlung (12) beleuchteten Probe (22) durch Detektion einer von der Probe (22) ausgehenden Probenstrahlung (24), bei dem

   - der Probe (22) Beleuchtungsstrahlung (12) von einer Beleuchtungsquelle (10, 10') her über einen Beleuchtungsstrahlengang zugeführt wird und
   - Probenstrahlung (24) einem Detektor (40) als Beobachtungsstrahlung über einen Beobachtungsstrahlengang zugeführt wird,

   wobei Beobachtungsstrahlung (24) ein in einem die Probe (22) nicht umfassenden Teil des Beobachtungsstrahlengangs angeordnetes Interferometer (30) durchläuft, in welchem

   - sie als einfallende Interferometer-Eingangsstrahlung mittels eines Interferometer-Strahlteilers (32) in zwei Strahlungsanteile aufgespalten wird,
   - die zwei Strahlungsanteile über zwei Wege, deren effektive Weglängendifferenz änderbar ist, geleitet und
   - miteinander interferierend zu einer Interferometer-Ausgangsstrahlung überlagert werden,

   wobei nacheinander eine Mehrzahl von Messdatenaufnahmen mit unterschiedlichen Einstellungen der effektiven Weglängendifferenz aufgenommen werden, sodass die Spektralverteilung der in einem Punkt des Detektors (40) auftreffenden Beobachtungsstrahlung (24) bei unterschiedlichen Messwertaufnahmen verschieden ist,
   **dadurch gekennzeichnet,**
   **dass** auch Beleuchtungsstrahlung (12) dasselbe Interferometer (30) durchläuft, sodass sich durch die Änderung der effektiven Weglängendifferenz im Beobachtungsstrahlengang auch die effektive Weglängendifferenz im Beleuchtungsstrahlengang ändert.

8. Verfahren nach Anspruch 7, **dadurch gekennzeichnet, dass** die Probe (22) Fluorophore enthält, die durch Anregung mittels als Beleuchtungsstrahlung dienenden Anregungslichtes (12) zur Emission von als Beobachtungsstrahlung dienendem Fluoreszenzlicht (24) angeregt werden.

9. Verfahren nach einem der Ansprüche 7 oder 8, **dadurch gekennzeichnet, dass** als Verfahrens-Zwischenergebnis eine Folge von punktweise zueinander korrespondierenden Intensitäts-Messwerteinheiten erzeugt wird, wobei jede Intensitäts-Messwerteinheit ein Messergebnis einer der einzelnen Messwertaufnahmen darstellt.

10. Verfahren nach einem der Ansprüche 7 bis 9, **dadurch gekennzeichnet, dass** jede Intensitäts-Messwerteinheit eine zweidimensionale Matrix ist, deren Einträge jeweils einen Intensitätsmesswert für einen der Position in der Matrix zugeordneten Bereich in der Probe (22) codieren.

11. Verfahren nach einem der Ansprüche 7 bis 10, **dadurch gekennzeichnet, dass** die Folge von Intensitäts-Messwerteinheiten punktweise mit gespeicherten, mögliche Bestandteile der Probe charakterisierenden Daten verglichen wird, um Eigenschaften tatsächlicher Bestandteile der Probe (22) in dem entsprechenden Punkt zu identifizieren.

12. Verfahren nach einem der Ansprüche 7 bis 11, **dadurch gekennzeichnet, dass** die Folge von Intensitäts-Messwerteinheiten punktweise mit gespeicherten, mögliche Bestandteile der Probe charakterisierenden Daten verrechnet wird, um Eigenschaften tatsächlicher Bestandteile der Probe (22) in dem entsprechenden Punkt zu identifizieren.

13. Verfahren nach einem der Ansprüche 7 bis 12, **dadurch gekennzeichnet, dass** die Folge von Intensitäts-Messwerteinheiten punktweise einer ein Spektrum erzeugenden mathematischen Operation unterworfen wird, welche eine Folge von punktweise zueinander korrespondierenden Spektraldateneinheiten erzeugt.

14. Verfahren nach Anspruch 13, **dadurch gekennzeichnet, dass** die mathematische Operation die Anwendung einer Fourier-Transformation einschließt.

15. Verfahren nach einem der Ansprüche 13 oder 14, **dadurch gekennzeichnet, dass** die mathematische Operation eine Realteil- und / oder eine Absolutbetrags-Berechnung eines komplexen Spektrums einschließt.

16. Verfahren nach einem der Ansprüche 13 bis 15, **dadurch gekennzeichnet, dass** die Folge von Spektraldateneinheiten gemäß *a priori* bekannter Informationen bzgl. möglicher Spektralverteilungen der Beleuchtungsstrahlung und / oder der Beobachtungsstrahlung in unterschiedliche Spektraldatensegmente segmentiert wird.

17. Verfahren nach einem der Ansprüche 13 bis 16, **dadurch gekennzeichnet, dass** eine Spektraldateneinheit oder eine Teilfolge von Spektraldateneinheiten aus einem allein der Beleuchtungsstrahlung zuordenbaren Spektraldatensegment zur Darstellung der interessierenden Objektebene der Probe (22) verwendet wird.

18. Verfahren nach einem der Ansprüche 13 bis 17, **dadurch gekennzeichnet, dass** eine erste Spektraldateneinheit oder eine Teilfolge erster Spektraldateneinheiten aus einem allein der Beleuchtungsstrahlung zuordenbaren Spektraldatensegment derart mit einer zweiten Spektraldateneinheit oder einer Teilfolge von zweiten Spektraldateneinheiten aus einem der Beobachtungsstrahlung zuordenbaren Spektraldatensegment zu einer berechneten Spektraldateneinheit verrechnet wird, dass die berechnete Spektraldateneinheit zur Darstellung der interessierenden Objektebene der Probe (22) verwendet wird.

19. Verfahren nach einem der Ansprüche 13 bis 18, **dadurch gekennzeichnet, dass** eine erste Spektraldateneinheit oder eine Teilfolge erster Spektraldateneinheiten aus einem sowohl der Beleuchtungsstrahlung als auch der Beobachtungsstrahlung zuordenbaren Spektraldatensegment derart mit einer zweiten Spektraldateneinheit oder einer Teilfolge von zweiten Spektraldateneinheiten aus einem der Beobachtungsstrahlung zuordenbaren Spektraldatensegment zu einer berechneten Spektraldateneinheit verrechnet wird, dass die berechnete Spektraldateneinheit zur Darstellung der interessierenden Objektebene der Probe (22) verwendet wird.

20. Verfahren nach einem der Ansprüche 13 bis 19, **dadurch gekennzeichnet, dass** eine Teilfolge von Spektraldateneinheiten punktweise mit gespeicherten, mögliche Bestandteile der Probe charakterisierenden Daten verglichen wird, um Eigenschaften tatsächlicher Bestandteile der Probe (22) in dem entsprechenden Punkt zu identifizieren.

**Claims**

1. Array for the spectrally resolving detection of a sample (22) that is illuminated by an illuminating radiation (12), by detecting a sample radiation (24) emitted by the sample (22),

   - having an illuminating beam path via which illuminating radiation (12) can be delivered to the sample (22) from a lighting source (10, 10'), and
   - having an observation beam path via which sample radiation (24) can be delivered to a detector (40) as observation radiation,

   wherein an interferometer (30) is arranged in a section of the observation beam path that does not comprise the sample (22), and said interferometer

   - splits incident interferometer input radiation into two radiation portions by means of an interferometer beam splitter (32),
   - directs said two radiation portions via two paths which are provided with radiation-guiding means (34, 36) and whose effective path length difference can be modified, and
   - superimposes said two radiation portions in a mutually interfering manner so as to form an interferometer output radiation,

so that the spectral distribution of the observation radiation (24) impinging at a specific point of the detector (40) can be modified by modifying the effective path length difference,

**characterized in that**

the interferometer (30) is arranged in a beam path section that is common to the illuminating beam path and the observation beam path in such a manner that the effective path length difference in the illuminating beam path also changes when the effective path length difference is modified in the observation beam path.

2. An array according to Claim 1, **characterized in that** the sample (22) contains fluorophores which can be excited through the excitation of excitation light (12) serving as illuminating radiation, to emit fluorescent light (24) serving as observation radiation.

3. An array according to one of the preceding claims, **characterized in that,** depending on the adjusted effective path length, the two paths along which [travel] the two radiation portions into which the interferometer (30) splits an incident interferometer input radiation occurring in the form of a parallel ray bundle are identical, overlap each other or are close to each other, and that the two radiation portions travel through them in opposite directions of travel.

4. An array according to any of the preceding claims, **characterized in that** the interferometer (30) is pivotably mounted in order to be able to modify the effective path length difference.

5. An array according to one of the preceding claims, **characterized in that** image-generating radiation-guiding means (14; 20; 28a, 28b; 34) are provided in the observation beam path and in the illuminating beam path, so that different points of a spatially delimited luminous area in a virtual image field plane (10') of the lighting source (10) can be assigned to different points on the sample (22), and that different points on the sample (22) can be assigned to different points in the detector (40).

6. An array according to Claim 5, **characterized in that** the luminous area of the lighting source (10) is arranged offset relative to the axis of symmetry of the illuminating beam path, so that radiation originating from a point in the luminous area, and delivered to the assigned point on the sample (22) not as illuminating radiation (12) but as radiation (12') back-reflected from the interferometer (30), is radiated in a direction that differs from the direction in which observation radiation (24) originating from the assigned point on the sample (22) is radiated as interferometer output radiation.

7. A procedure for the spectrally resolving detection of a sample (22) illuminated by an illuminating radiation (12), by detecting a sample radiation (24) emitted by the sample (22), in which

- illuminating radiation (12) is delivered to the sample (22) from a lighting source (10, 10') via an illuminating beam path, and
- sample radiation (24) is delivered as observation radiation to a detector (40) via an observation beam path, wherein observation radiation (24) passes through an interferometer (30) arranged in a part of the observation beam path that does not contain the sample (22), in which
- the observation radiation is split up, as incident interferometer input radiation, into two radiation portions by means of an interferometer beam splitter (32),
- the two radiation portions are directed via two paths whose effective path length difference can be modified, and
- they are superimposed on each other in a mutually interfering manner to form an interferometer output radiation,

and, one after another, a plurality of measurement data are recorded at different settings of the effective path length difference, so that the spectral distribution of the observation radiation (24) impinging at one point on the detector (40) is different for different measurements,

**characterized in that**

illumination radiation (12) also passes through the same interferometer (30), so that because of the change in the effective path length difference in the observation beam path, the effective path length difference in the illuminating beam path also changes.

8. A procedure according to Claim 7, **characterized in that** the sample (22) contains fluorophores which can be excited by means of excitation light (12) serving as illuminating radiation, to emit fluorescent light (24) serving as observation radiation.

9. A procedure according to one of Claims 7 or 8, **characterized in that** a series of intensity measurement units corresponding to each other in a point-to-point fashion is generated as an interim result of the procedure, and each intensity measurement unit represents a measuring result of any of individual measurements.

10. A procedure according to any of Claims 7 to 9, **characterized in that** each intensity measurement unit is a two-dimensional matrix whose inputs in each case code an intensity measurement for an area in the sample (22) assigned to the position in the matrix.

11. A procedure according to any of Claims 7 to 10, **characterized in that** the series of intensity measurement units is compared in a point-to-point fashion with stored data characterizing possible components of the sample, in order to identify properties of actual components of the sample (22) at the corresponding point.

12. A procedure according to any of Claims 7 to 11, **characterized in that** the series of intensity measurement units is combined in a point-to-point fashion with stored data characterizing possible components of the sample, in order to identify properties of actual components of the sample (22) at the corresponding point.

13. A procedure according to any of Claims 7 to 12, **characterized in that** the series of intensity measurement units is subjected in a point-to-point fashion to a spectrum-generating mathematical operation which generates a series of spectral data units that correspond to each other in a point-to-point fashion.

14. A procedure according to Claim 13, **characterized in that** the mathematical operation includes the use of a Fourier transformation.

15. A procedure according to one of Claims 13 or 14, **characterized in that** the mathematical operation includes a real-part calculation and/or an absolute value calculation of a complex spectrum.

16. A procedure according to any of Claims 13 to 15, **characterized in that** the series of spectral data units is segmented into different spectral data segments according to *a priori* known information regarding possible spectral distributions of the illuminating radiation and/or the observation radiation.

17. A procedure according to any of Claims 13 to 16, **characterized in that** a spectral data unit or a partial series of spectral data units from a spectral data segment that is assigned solely to the illuminating radiation is used to represent the object plane of interest of the sample (22).

18. A procedure according to any of Claims 13 to 17, **characterized in that** a first spectral data unit or a partial series of first spectral data units from a spectral data segment that is assigned solely to the illumination radiation is offset against a second spectral data unit or a partial series of second spectral data units from a spectral data segment that is assigned to the observation radiation, to yield a calculated spectral data unit, in such a way that the calculated spectral data is used to represent the object plane of interest of the sample (22).

19. A procedure according to any of Claims 13 to 18, **characterized in that** a first spectral data unit or a partial series of first spectral data units from a spectral data segment that can be assigned not only to the illuminating radiation but also to the observation radiation is integrated with a second spectral data unit or a partial series of second spectral data units from a spectral data segment that can be assigned to the observation radiation, to yield a calculated spectral data unit, in such a way that the calculated spectral data unit is used for representing the object plane of interest of the sample (22).

20. A procedure according to any of Claims 13 to 19, **characterized in that** a partial series of spectral data units is compared in a point-to-point fashion with stored data characterizing possible components of the sample, in order to identify properties of actual components of the sample (22) at the corresponding point.

**Revendications**

1. Dispositif pour la détection à résolution spectrale d'un échantillon (22) éclairé par un rayonnement d'éclairage (12), par détection d'un rayonnement d'échantillon (24) émis par l'échantillon (22) comprenant :

   - une trajectoire de faisceau d'éclairage sur laquelle le rayonnement d'éclairage (12) peut être acheminé à l'échantillon (22) issu d'une source d'éclairage (10, 10'); et
   - une trajectoire de faisceau d'observation sur laquelle le rayonnement d'échantillon (24) peut être acheminé à un détecteur (40) pour servir de rayonnement d'observation ;

dans lequel un interféromètre (30) se trouve dans une partie de la trajectoire de faisceau d'observation qui ne comprend pas l'échantillon (22), et ledit interféromètre :

- décompose le rayonnement d'entrée incident dans l'interféromètre en deux composants de rayonnement au moyen d'un diviseur de faisceau d'interféromètre (32) ;
- conduit lesdits deux composants de rayonnement sur deux trajectoires qui présentent des moyens de guidage de rayonnement (34, 36) et dont la différence effective de la longueur de trajectoire peut être modifiée ; et
- superpose lesdits deux composants de rayonnement de façon à créer une interférence mutuelle pour former un rayonnement de sortie d'interféromètre ;

de façon que la répartition spectrale du rayonnement d'observation (24) qui frappe un point spécifique du détecteur (40) puisse être modifiée en faisant varier la différence effective de la longueur de trajectoire,
**caractérisé en ce que**
l'interféromètre (30) se trouve dans une section de la trajectoire du faisceau qui est commune à la trajectoire du faisceau d'éclairage et à la trajectoire du faisceau d'observation de sorte que la modification de la différence effective de la longueur de trajectoire dans la trajectoire du faisceau d'observation s'accompagne également de la modification de la différence effective de la longueur de trajectoire dans la trajectoire du faisceau d'éclairage.

2. Dispositif selon la revendication 1, **caractérisé en ce que** l'échantillon (22) contient des fluorophores pouvant être excités au moyen d'une lumière d'excitation (12) servant de rayonnement d'éclairage, pour émettre la lumière fluorescente (24) servant de rayonnement d'observation.

3. Dispositif selon l'une des revendications précédentes, **caractérisé en ce que**, en fonction de la longueur de trajectoire effective ajustée, les deux trajectoires le long desquelles [voyagent] les deux composants de rayonnement dans lesquels l'interféromètre (30) décompose un rayonnement d'entrée incident dans l'interféromètre sous forme d'un faisceau de rayons parallèles sont identiques, se chevauchent ou sont proches l'une de l'autre, et les deux composants de rayonnement voyagent à travers elles dans des directions opposées l'une à l'autre.

4. Dispositif selon une quelconque des revendications précédentes, **caractérisé en ce que** l'interféromètre (30) est montée de manière pivotante afin d'être en mesure de modifier la différence effective de la longueur de trajectoire.

5. Dispositif selon une quelconque des revendications précédentes, **caractérisé en ce que** les moyens de guidage de rayonnement pour génération d'image (14; 20; 28a, 28b; 34) sont fournis dans la trajectoire du faisceau d'observation et la trajectoire du faisceau d'éclairage, pour que différents points d'une zone lumineuse délimitée spatialement dans un plan de champ d'image virtuel (10') de la source d'éclairage (10) puissent être attribués à différents points de l'échantillon (22), et que différents points sur l'échantillon (22) puissent être attribués à différents points dans le détecteur (40).

6. Dispositif selon la revendication 5, **caractérisé en ce que** la zone lumineuse de la source d'éclairage (10) est décalée par rapport à l'axe de symétrie de la trajectoire du faisceau d'éclairage, de façon que le rayonnement issu d'un point de la zone d'éclairage et acheminé au point attribué sur l'échantillon (22) non pas pour servir de rayonnement d'éclairage (12) mais de rayonnement (10') rétroréfléchi de l'interféromètre (30), rayonne dans une direction différente de celle dans laquelle le rayonnement d'observation (24) issu du point attribué sur l'échantillon (22) rayonne en tant que rayonnement de sortie de l'interféromètre.

7. Procédé pour la détection à résolution spectrale d'un échantillon (22) éclairé par un rayonnement d'éclairage (12), par détection d'un rayonnement d'échantillon (24) émis par l'échantillon (22), dans lequel :

- le rayonnement d'éclairage (12) est acheminé à l'échantillon (22) à partir d'une source d'éclairage (10, 10') sur une trajectoire de faisceau d'éclairage, et
- le rayonnement d'échantillon (24) est acheminé en tant que rayonnement d'observation à un détecteur (40) sur une trajectoire de faisceau d'observation,
et le rayonnement d'observation (24) passe à travers un interféromètre (30) se trouvant dans une partie de la trajectoire du faisceau d'observation qui ne contient pas l'échantillon (22), dans lequel :
- le rayonnement d'observation est décomposé, en tant que rayonnement d'entrée incident dans l'interféromètre, en deux composants de rayonnement au moyen d'un diviseur de faisceau d'interféromètre (32) ;

- les deux composants de rayonnement sont conduits par deux trajectoires dont la différence effective de la longueur de trajectoire peut être modifiée, et
- elles sont superposées l'une sur l'autre de façon à créer une interférence mutuelle pour former un rayonnement de sortie d'interféromètre ;

et, une pluralité de données de mesure sont enregistrées, l'une après l'autre, avec différents paramètres de la différence effective de la longueur de trajectoire, de façon que la répartition spectrale du rayonnement d'observation (24) qui frappe à un point du détecteur (40) soit différente pour différentes mesures, **caractérisé en ce que**
le rayonnement d'éclairage (12) passe également à travers le même interféromètre (30), de façon que la modification de la différence effective de la longueur de trajectoire dans la trajectoire du faisceau d'observation s'accompagne également de la modification de la différence effective de la longueur de trajectoire dans la trajectoire de faisceau d'éclairage.

8. Procédé selon la revendication 7, **caractérisé en ce que** l'échantillon (22) contient des fluorophores pouvant être excités au moyen d'une lumière d'excitation (12) servant de rayonnement d'éclairage, pour émettre la lumière fluorescente (24) servant de rayonnement d'observation.

9. Procédé selon l'une des revendications 7 ou 8, **caractérisé en ce qu'**une série d'unités de mesure d'intensité correspondant l'une à l'autre point par point est générée en tant que résultat provisoire du procédé, et que chaque unité de mesure d'intensité représente un résultat de mesure d'une quelconque des mesures individuelles.

10. Procédé selon une quelconque des revendications 7 à 9, **caractérisé en ce que** chaque unité de mesure d'intensité est une matrice bidimensionnelle dont les entrées dans chaque cas codent une mesure d'intensité pour une zone dans l'échantillon attribuée à la position dans la matrice (22).

11. Procédé selon une quelconque des revendications 7 à 10, **caractérisé en ce que** la série d'unités de mesure d'intensité est comparée point par point aux données stockées caractéristiques d'éventuels composants de l'échantillon afin d'identifier les propriétés des composants réels de l'échantillon (22) dans le point correspondant.

12. Procédé selon une quelconque des revendications 7 à 11, **caractérisé en ce que** la série d'unités de mesure d'intensité est combinée point par point avec les données stockées caractéristiques d'éventuels composants de l'échantillon afin d'identifier les propriétés des composants réels de l'échantillon (22) dans le point correspondant.

13. Procédé selon une quelconques des revendications 7 ou 12, **caractérisé en ce que** la série d'unités de mesure d'intensité est soumise point par point à une opération mathématique de génération de spectres qui génère une série d'unités de données spectrales correspondant l'une à l'autre point par point.

14. Procédé selon la revendication 13, **caractérisé en ce que** l'opération mathématique comprend l'utilisation d'une transformation de Fourier.

15. Procédé selon une des revendications 13 ou 14, **caractérisé en ce que** l'opération mathématique comprend un calcul de partie réelle et/ou un calcul de valeur absolue d'un spectre complexe.

16. Procédé selon une quelconque des revendications 13 à 15, **caractérisé en ce que** la série d'unités de données spectrales est divisée en différents segments de données spectrales en fonction des renseignements connus à priori concernant les éventuelles répartitions spectrales du rayonnement d'éclairage et/ou du rayonnement d'observation.

17. Procédé selon une quelconque des revendications 13 à 16, **caractérisé en ce qu'**une unité de données spectrales ou une série partielle d'unités de données spectrales d'un segment de données spectrales attribuée uniquement au rayonnement d'éclairage est utilisée pour représenter le plan d'objet d'intérêt de l'échantillon (22).

18. Procédé selon une quelconque des revendications 13 à 17, **caractérisé en ce qu'**une première unité de données spectrales ou une série partielle de premières unités de données spectrales d'un segment de données spectrales attribuée uniquement au rayonnement d'éclairage est décalée par rapport à une seconde unité de données spectrales ou une série partielle de secondes unités de données spectrales d'un segment de données spectrales attribué au rayonnement d'observation, pour obtenir une unité de données spectrales calculées, de sorte que les données spectrales calculées soient utilisées pour représenter le plan d'objet d'intérêt de l'échantillon (22).

19. Procédé selon une quelconque des revendications 13 à 18, **caractérisé en ce qu'une** première unité de données spectrales ou une série partielle de premières unités de données spectrales d'un segment de données spectrales pouvant être attribuée non seulement au rayonnement d'éclairage mais également au rayonnement d'observation est intégrée dans une seconde unité de données spectrales ou une série partielle de secondes unités de données spectrales d'un segment de données spectrales pouvant être attribué au rayonnement d'observation, pour obtenir une unité de données spectrales calculées, de sorte que l'unité de données spectrales calculées soit utilisée pour représenter le plan d'objet d'intérêt de l'échantillon (22).

20. Procédé selon une quelconque des revendications 13 à 19, **caractérisé en ce qu'**une série partielle d'unités de données spectrales est comparée point par point aux données stockées caractéristiques d'éventuels composants de l'échantillon afin d'identifier les propriétés des composants réels de l'échantillon (22) dans le point correspondant.

*Fig. 1*

# Stand der Technik

*Fig. 2*

*a)*

S(λ)

k=2π/λ

*b)*

|𝓕(I_det)(λ)|

k=2π/λ

**Fig. 3**

*a)*

S_em

S_ex

S(λ)

k=2π/λ

*b)*

|𝓕(I_det)(λ)|

k=2π/λ

**Fig. 4**

Fig. 5